# EUROPÄISCHE PATENTSCHRIFT

(11) **EP 1 261 505 B1**
(45) Veröffentlichungstag und Bekanntmachung des Hinweises auf die Patenterteilung: **02.01.2008**
(21) Anmeldenummer: 01909523.1
(22) Anmeldetag: 25.01.2001
(51) Int. Cl.: B60N 2/00

(54) **VERFAHREN UND SYSTEM ZUM EINSTELLEN VON FÜR DIE BENUTZUNG EINES KRAFTFAHRZEUGS RELEVANTEN PARAMETERN**
METHOD AND SYSTEM FOR ADJUSTING PARAMETERS THAT ARE RELEVANT FOR OPERATING A MOTOR VEHICLE
PROCEDE ET SYSTEME POUR REGLER DES PARAMETRES IMPORTANTS POUR L'UTILISATION D'UN VEHICULE AUTOMOBILE

(30) Priorität: 02.03.2000 DE 10010234
(43) Veröffentlichungstag der Anmeldung: 04.12.2002
(73) Patentinhaber: Siemens VDO Automotive AG, 93055 Regensburg (DE)
(72) Erfinder: ERTL, Ludwig, 93057 Regensburg (DE); KÖHLER, Thorsten, 93180 Deuerling (DE); ZITTLAU, Dirk, 92348 Stöckelsberg (DE)
(74) Vertreter: Maier, Daniel Oliver
(86) Internationale Anmeldenummer: PCT/DE2001/000294
(87) Internationale Veröffentlichungsnummer: WO 2001/064468

(56) Entgegenhaltungen:
- WO-A-01/19648
- DE-A- 19 519 619
- DE-A- 19 522 897
- US-A- 4 625 329
- US-A- 5 748 473
- US-A- 6 134 492
- US-A- 6 141 432
- PATENT ABSTRACTS OF JAPAN vol. 009, no. 326 (M-441), 21. Dezember 1985 (1985-12-21) -& JP 60 157963 A (NIPPON DENSO KK), 19. August 1985 (1985-08-19)

## Beschreibung

Die Erfindung betrifft ein Verfahren und ein System zum Einstellen von für die Führung eines Kraftfahrzeugs relevanten Parametern.

In moderneren Kraftfahrzeugen finden elektrische Verstellmöglichkeiten von Sitzen, Rückblickspiegeln, Lenkrädern und Gurten immer größere Verbreitung. Die Bedienung dieser Verstellmöglichkeiten wird immer komplexer und stellt für den Fahrer bzw. eine Fahrerin eine Herausforderung dar, insbesondere wenn ein fremdes Fahrzeug in Betrieb genommen wird. Viele Personen sind zudem nur unzureichend über eine ergonomisch zweckmäßige Sitzposition informiert, die eine ermüdungsfreie und möglichst sichere Bedienung bzw. Benutzung des Fahrzeugs zulässt. Häufig befindet sich die Sitzposition zu dicht am Lenkrad, wodurch ein schneller Lenkeinschlag behindert wird. Bei einer zu großen Entfernung vom Bremspedal kann dieses im Notfall nicht voll betätigt werden, was zu unmittelbaren Sicherheitsproblemen führt. Weitere typische Fehler sind falsch eingestellte Umlenkpunkte des Sicherheitsgurtes an der B-Säule, eine zu hohe oder zu niedrige Sitzposition, die nur einen eingeschränkten Blickwinkel auf die Straße erlaubt, Lenkradpositionen, die einen Teil der Instrumentierung abdecken sowie falsch eingestellte Kopfstützen.

Typischerweise wird bisher die Einstellung des Sitzes, der Rückblickspiegel und des Lenkrades vom Fahrer manuell oder elektrisch mittels Tastschaltern vorgenommen. Bekannt ist auch ein sogenanntes Sitz-Memory, in dem eine begrenzte Zahl von Fahrern die von ihnen als optimal empfundene Sitz- und Spiegeleinstellung speichern kann. Die Einstellungen stehen dann bei entsprechender Anwahl über einen Memory-Schalter oder abgespeichert auf einem für den Fahrzeugzugang erforderlichen Datenträger unmittelbar zur Verfügung. Die Höhe der Gurtumlenkung ist häufig an die Sitzstellung in Richtung der Fahrzeuglängsachse gekoppelt. Dabei wird die tatsächliche Größe der auf dem Sitz befindlichen Person nicht berücksichtigt.

Das Dokument US 4,625,329, mit den Merkmalen des Oberbegriffs des Ansprüche 1 und 6, beschreibt die Analyse der Position eines Fahrers in einem Fahrzeug. Es werden Bilder des Fahrers aufgenommen und daraufhin dessen Position in einem dreidimensionalen Koordinatensystem bestimmt. Abhängig von der Position des Fahrers werden die folgenden Größen gesteuert: die Stellung des Rückspiegels, des Lenkrads, der Kopfstütze, Luftstromrichtung der Klimaanlage, Informationsanzeige auf einem Display.

Das Dokument JP 60157963 beschreibt die Einstellung der Position des Lenkrades eines Fahrzeugs abhängig von der Position des Oberkörpers des Fahrers.

Das Dokument DE 195 19 619 A1 beschreibt eine Justierautomatik für Außen-/Innenspiegel von Kraftfahrzeugen. Die Position des Kopfes des Fahrers wird erfasst. Dementsprechend werden die drei Fahrzeugspiegel eingestellt.

Das Dokument US 5,748,473 beschreibt eine automatische Sitzeinstellung für ein Fahrzeug. Durch Sensoren wird die Morphologie des Fahrers erfasst. Hiervon abhängig kann z.B. Kopflehne, Pedalposition und Lenkrad eingestellt werden.

Das Dokument DE 195 22 897 A1 beschreibt einen einstellbaren Fahrersitz. Es sind Einrichtungen zur Sitzlängsverstellung, zur vorderen Höhenverstellung, zur hinteren Höhenverstellung, zur Lehnenverstellung, zur Sitzkissentiefenverstellung und zur Kopfstützenhöheneinstellung vorgesehen.

Der Erfindung liegt die Aufgabe zugrunde, ein Verfahren und ein System zum Einstellen von für die Führung eines Kraftfahrzeugs relevanten Parametern anzugeben, das bei einfacher Durchführbarkeit zu ergonomisch optimalen Einstellungen führt.

Die Aufgabe der Erfindung wird durch die Merkmale der unabhängigen Patentansprüche gelöst.

Es wird mittels eines dreidimensionalen bildgebenden Verfahrens zumindest die Position eines Oberflächenbereiches, beispielsweise eines Körperteils eines Fahrers ermittelt und werden Bauteile, die für die Benutzung bzw. Führung des Fahrzeugs relevant sind, entsprechend eingestellt. Dabei kann die Einstellung des Fahrersitzes oder des Lenkrades derart erfolgen, dass der Körper des Fahrers oder dessen Arme und Beine vorbestimmte, für die Bedienung günstige Lagen einnehmen. Die Einstellung kann auch so erfolgen, dass für die Bedienung relevante Bauteile, beispielsweise Rückblickspiegel, derart eingestellt werden, dass sich bei einer erfassten Kopfstellung günstige Sichtverhältnisse ergeben.

Die abhängigen Patentansprüche sind auf vorteilhafte Durchführungsformen beziehungsweise Weiterbildungen des erfindungsgemäßen Verfahrens gerichtet.

Der Vorrichtungsanspruch kennzeichnet den grundsätzlichen Aufbau des Systems zur Lösung des diesbezüglichen Teils der Erfindungsaufgabe.

Mit den Merkmalen der vom Vorrichtungsanspruch abhängigen Patentansprüche wird das erfindungsgemäße System in vorteilhafter Weise weiter gebildet.

Die Erfindung wird im Folgenden anhand schematischer Zeichnungen beispielsweise und mit weiteren Einzelheiten erläutert.

Es stellen dar:
- Fig. 1: eine schematische Seitenansicht auf den fahrerseitigen Innenraum eines Kraftfahrzeuges,
- Fig. 2: ein Blockschaltbild eines erfindungsgemäßen Systems und
- Fig. 3: ein Flussdiagramm zur Erläuterung der Arbeitsweise des Systems.

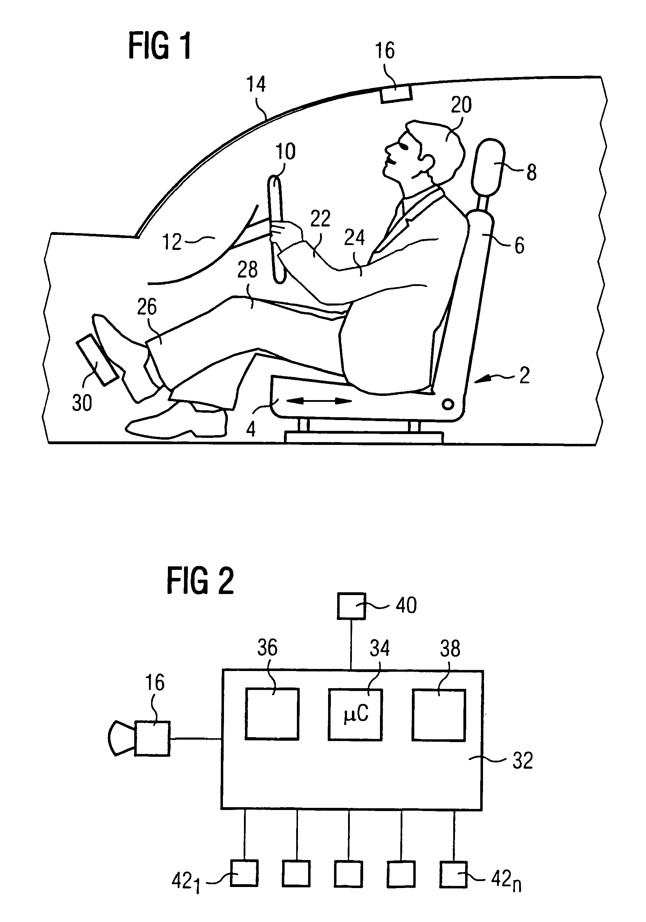

Gemäß Fig. 1 weist ein Kraftfahrzeug einen Fahrersitz 2 mit einem Sitzkissen 4, einer Sitzlehne 6 und einer Kopfstütze 8 auf. Mittels an sich bekannter und nicht dargestellter Stellmotoren ist der Fahrersitz 2 insgesamt in Richtung des Doppelpfeils in Längsrichtung des Fahrzeugs beweglich. Das Sitzkissen 4 kann zusätzlich in seiner Höhe und Neigung verstellt werden. Die Sitzlehne 6 kann in ihrer Neigung verstellt werden. Die Kopfstütze 8 kann in ihrer Höhe verstellt werden.

Ein Lenkrad 10 kann mittels nicht dargestellter Stellmotoren in seinem Abstand von einer Schalttafel 12, d. h. in Richtung der nicht dargestellten Lenksäule verschoben werden und kann in der Höhe verstellt werden, so dass in Schalttafel 12 vorhandene Instrumente durch das Lenkrad 10 hindurch sichtbar sind.

Oberhalb der Windschutzscheibe 14 ist eine Einrichtung 16 angeordnet, mittels der ein dreidimensionales Oberflächenbild des auf dem Fahrersitz 2 befindlichen Fahrers (bzw. der Fahrerin) erzeugbar ist. Solche bildgebende Einrichtungen sind an sich bekannt. Die Einrichtung 16 kann beispielsweise zwei CMOS- oder CCD-Kameras mit einem Basisabstand von einigen Zentimetern enthalten. Das 3D-Bild ergibt sich aus der Position korrespondierender Bildpunkte unter Verwendung des Basisabstandes mittels eines Triangulationsverfahrens. Damit werden Messfehler erreicht, die kleiner sind als der Basisabstand. Ein anderes Beispiel für die Ausbildung der Einrichtung 16 ist die Verwendung einer Sensoreinrichtung mit Sensoren, die den Fahrerraum mit eng gebündelten Strahlen abtasten, wobei sie den Abstand des Oberflächenpunktes sensieren, der das jeweilige Strahlenbündel reflektiert. Solche bildgebende Einrichtungen werden beispielsweise dazu verwendet, um festzustellen, ob sich die Brust oder der Kopf des Fahrers zu nahe an einer Airbageinrichtung befinden, um die Auslösung des Airbags zu verzögern oder erforderlichenfalls ganz zu verhindern.

Mit Hilfe der bildgebenden Einrichtung 16 lässt sich beispielsweise die Position des Kopfes 20 des Fahrers relativ zur Einrichtung 16 ermitteln. Weiter können der Beugewinkel zwischen Unterarm 22 und Oberarm 24 sowie die Winkel erfasst werden, die der Unterschenkel 26 sowie der Oberschenkel 28 mit der Waagrechten bilden.

Mit 30 ist ein Teil der Pedalbaugruppe bezeichnet, beispielsweise ein Gaspedal.

Nicht dargestellt in Fig. 1 sind ein Innenrückspiegel mit zugehörigen Stellmotoren zur Verstellung, die Außenrückspiegel mit zugehörigen Stellmotoren, ein Gurtumlenkpunkt zur Umlenkung des nicht dargestellten Sicherheitsgurtes am fahrerseitigen Pfosten B, ein in der Schalttafel oder im Bereich über der Windschutzscheibe angeordnetes Richtmikrofon zur Aufnahme von Sprache des Fahrers usw. Ebenfalls nicht dargestellt sind vorteilhaft vorgesehene Positionsgeber, die die jeweilige Stellung des Stellmotors bzw. eines von ihm verstellten Bauteils an das Steuergerät 32 rückmelden.

Fig. 2 zeigt ein vereinfachtes Blockschaltbild des erfindungsgemäßen Systems:
Ein elektronisches Steuergerät 32 enthält einen Mikroprozessor 34, eine Auswerteeinrichtung 36 sowie eine Speichereinrichtung 38. Mit dem Steuergerät 32 sind die bildgebende Einrichtung 16, ein Betriebsausschalter 40 sowie Stellmotoren 42₁ - 42ₙ verbunden.

Aufbau und Funktion der einzelnen in einem solchen elektronischen Steuergerät enthaltenen Funktionsblöcke sind an sich bekannt und werden daher nicht im Einzelnen erläutert.

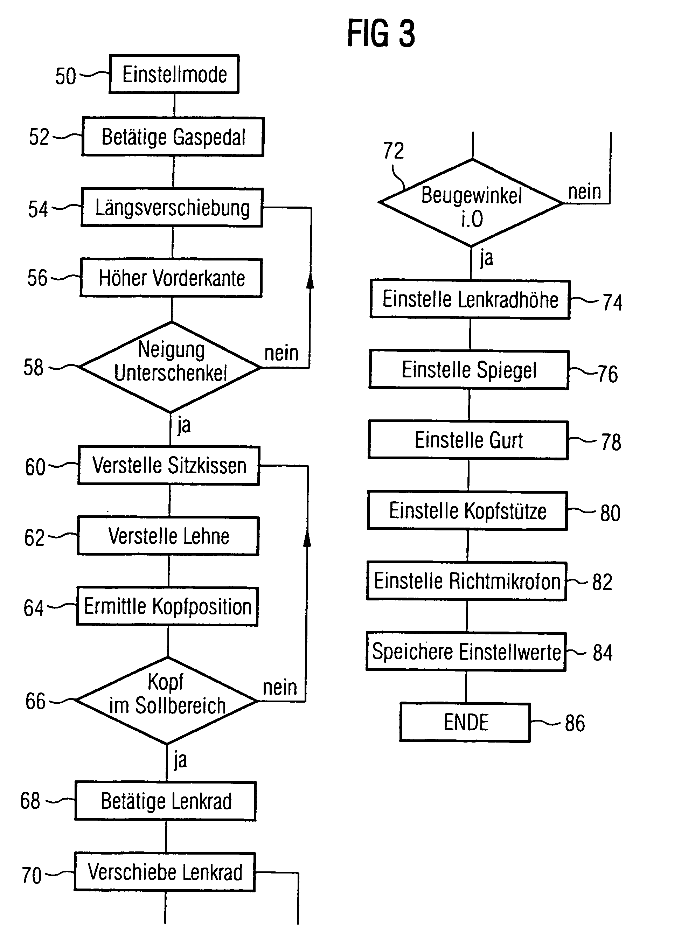

Im Folgenden wird anhand der Fig. 3 das Zusammenwirken der Funktionsblöcke des Blockschaltbildes gemäß Fig. 2 beispielhaft erläutert:

Sei angenommen, im Schritt 50 werde der Betriebsartschalter 40 betätigt, der beispielsweise in der Schalttafel angeordnet ist und dessen Betätigung bedeutet, dass das System in den Einstellmode übergeht. Im Schritt 52 fordert das System beispielsweise über ein in der Schalttafel angeordnetes Display den Fahrer auf, das Gaspedal 30 zu betätigen, d. h. das rechte Bein in eine Stellung zu bringen, die der normalen Gaspedalbetätigung entspricht (es versteht sich, dass der Motor nicht läuft und das Fahrzeug stillsteht). Alternativ kann das System im Schritt 52 den Fahrer auch zur Betätigung eines anderen Pedals auffordern oder dazu auffordern, das linke Bein im Fall eines Automatikfahrzeugs in eine Ruhestellung zu bringen, in der der linke Fuß auf einer Fußablage ruht.

In den Schritten 54 und 56 verschiebt das System den Fahrersitz 2 dann in Längsrichtung und verändert die Höhe der Sitzvorderkante, bis im Schritt 58 festgestellt wird, ob die Neigung des Unterschenkels 26 einem vorbestimmten Wert entspricht. Ist dies nicht der Fall, kehrt das System zum Schritt 54 zurück. Ist das der Fall, so verkippt das System im Schritt 60 das Sitzkissen 4, bis zwischen dem Unterschenkel 26 und dem Oberschenkel 28 ein vorbestimmter, komfortabler Beugewinkel erreicht ist. Es versteht sich, dass die geometrischen Lagen des Unterschenkels 26 und des Oberschenkels 28 von der Auswerteeinrichtung 36 des elektronischen Steuergerätes 32 ermittelt werden und in der Speichereinrichtung 38 des Steuergerätes jeweils vorbestimmte Sollwerte abgelegt sind. Wenn die Sitzkissenneigung im Schritt 60 derart verstellt ist, dass ein vorbestimmter komfortabler Beinbeugewinkel erreicht ist und der Oberschenkel in vorbestimmter Weise auf dem Sitzkissen aufliegt, wird im Schritt 62 die Neigung der Sitzlinie 6 soweit verstellt, dass ein komfortabler, vorbestimmter Rumpfbeugewinkel erzielt wird, d. h. ein vorbestimmter Winkel zwischen den Oberschenkeln und dem Rumpf des Fahrers.

Anschließend wird im Schritt 64 von der Einrichtung 16 die Position des Kopfes 20 ermittelt und bestimmt, ob sich der Kopf in einem vorbestimmten Sollbereich befindet, in dem er hoch genug über der Motorhaube und weit genug unterhalb der Oberkante der Windschutzscheibe ist. Wenn im Schritt 66 ermittelt wird, dass dies nicht der Fall ist, kehrt das System zum Schritt 60 zurück. Ist dies der Fall, so ergeht im Schritt 68 die Aufforderung, das Lenkrad 10 zu betätigen. Im Schritt 70 wird das Lenkrad vorwärts oder rückwärts bewegt, bis im Schritt 72 festgestellt wird, dass der Beugewinkel zwischen Unterarm und Oberarm einem vorbestimmten, gespeicherten Wert entspricht. Es versteht sich, dass der Beugewinkel von der bildgebenden Einrichtung 16 erfasst wird.

Nach Einstellung der Position des Lenkrades 10 hinsichtlich dessen Abstand vom Fahrer wird im Schritt 74 die Höhe des Lenkrades eingestellt. Dies ist anhand der bekannten Position des Kopfes 20 bzw. der Augen, der Längsposition des Lenkrades und der bekannten Position der Anzeigeinstrumente in der Schalttafel möglich.

Im Schritt 76 werden dann anhand der bekannten Position des Kopfes 20 die Rückblickspiegel für eine optimale Sicht nach hinten eingestellt. Anschließend wird im Schritt 78 anhand der bekannten Position des Rumpfes des Fahrers der Gurt am Lenkpunkt eingestellt. Im Schritt 80 wird die Kopfstütze 8 entsprechend der Position des Kopfes 20 eingestellt.

Im Schritt 82 wird anhand der bekannten Position des Kopfes 20 ein Richtmikrofon eingestellt.

Im Schritt 84 werden alle Einstellwerte zusammen mit einer Personenkennung gespeichert, so dass sie für eine zukünftige Einstellung unmittelbar zur Verfügung stehen.

Im Schritt 86 wird der Algorithmus beendet.

Es versteht sich, dass die Stellmotoren mit Positionsgebereinrichtungen versehen sind, so dass das elektronische Steuergerät 32 die jeweiligen eingestellten Positionen kennt und unmittelbar anfahren kann.

Nicht beansprucht ist, dass bei Fahrzeugen, die mit verstellbaren Fußpedalgruppen ausgerüstet sind, der Fahrersitz zunächst im Hinblick auf Höhe und Neigung des Sitzkissens und der Sitzlehne unter dem Gesichtspunkt der Positionierung der Augen des Fahrers, einem komfortablen Rumpfbeugewinkel, einer komfortablen Oberschenkelauflage und einem komfortablen Beugewinkel zwischen Oberschenkel und Unterschenkel eingestellt werden kann. Die Pedalbaugruppe kann dann im Hinblick auf komfortable Bedienbarkeit verschoben werden.

Da die optische Bestimmung der Beugewinkel bzw. der Neigungswinkel der einzelnen Gliedmaßen mit Hilfe des bildgebenden Verfahrens verhältnismäßig aufwendig ist, kann - ebenfalls nicht beansprucht - das Verfahren in einer vereinfachten Ausführungsform derart durchgeführt werden, dass in einem Einstellmode die Stellmotoren des Sitzes von dem Fahrer überdrückt werden können, so dass der Fahrer durch bloße Bewegung des oder der Beine und seines Rumpfes den Sitz in eine komfortable und für ihn subjektiv ergonomisch richtige Position bringen kann. Anschließend kann der Fahrer auch das Lenkrad in einen zweckentsprechenden Abstand bringen, wobei die Einstellwerte jeweils selbsttätig gespeichert werden, wenn der Fahrer sich während einer vorbestimmten Zeitdauer nicht bewegt. Von der bildgebenden Einrichtung wird dann die Position des Kopfes ermittelt und anhand der Kopfposition werden, wie erläutert, die Höhe des Lenkrades, die Rückblickspiegel sowie gegebenenfalls weitere Funktionsparameter eingestellt.

Mit dem erfindungsgemäßen Verfahren bzw. der erfindungsgemäßen Vorrichtung können zahlreiche weitere Bedienelemente oder Funktionsumfänge an die ggfs. iterativ eingestellte Position einer auf dem Fahrersitz befindlichen Position angepasst werden. Neben den bereits erwähnten Einstellungen des Sitzes, des Lenkrades, der Rückspiegel, der Pedale gehören dazu die Position des Schalthebels, eines Richtmikrofons für eine Freisprechanlage und/oder zum Eingeben von Bedienbefehlen usw. Weiter können Komfortfunktionen eingestellt werden, wie die Ausrichtung von Ausströmern einer Heizungs-/Klimaanlage, die Temperatureinstellung und die Strömungsgeschwindigkeit der ausströmenden Luft usw. Die jeweiligen Funktionsumfänge müssen nicht notwendigerweise über mechanische Stellglieder eingestellt werden, sondern können unmittelbar elektronisch beeinflussbar sein. Dies gilt beispielsweise für die Richtcharakteristik eines Mikrofons, für das Interferenzmuster einer Einrichtung zur Schallkompensation, mit der durch zusätzliche Schallabstrahler im Bereich des Kopfes eine Auslöschung von Fahrzeuggeräuschen erzielt wird, usw.

Die Vorrichtung kann eine Zeitverzögerung enthalten, so dass sichergestellt ist, dass die selbsttätige Einstellung erst erfolgt, wenn die auf dem Fahrersitz befindliche Position ihre normale Position einnimmt. Die Vorrichtung kann über eine Datenleitung, beispielsweise einen CAN-Bus, unmittelbar mit der Fahrzeugelektronik kommunizieren, über die ein Fahrzeugstillstand signalisiert wird, die Kommunikation mit den Stellmotoren und Sensoren erfolgt oder ein an sich vorhandenes, mit einem Rechner ausgerüstetes Steuergerät für die erforderlichen Berechnungen verwendet wird. Das erfindungsgemäße Verfahren und die erfindungsgemäßen Vorrichtungen können auch zur Einstellung von anderen als dem Fahrersitz zugeordneten Funktionsumfängen verwendet werden, beispielsweise zur Schallkompensation für den Beifahrersitz und/oder die Rücksitze.

## Patentansprüche

1. Verfahren zum Einstellen von für die Benutzung eines Kraftfahrzeugs relevanten Bauteilen,
bei welchem Verfahren
die Position zumindest eines Körperteils eines Fahrers mittels eines dreidimensionalen, bildgebenden Verfahrens ermittelt wird und
wenigstens ein für die Benutzung des Fahrzeugs relevantes Bauteil in eine von der Position eines Oberflächenbereiches des Fahrers abhängige Stellung bewegt wird,
**dadurch gekennzeichnet, dass**
die Einstellung der Position des Fahrersitzes bei nicht verschiebbarer Fußpedalgruppe nach folgender Reihenfolge derart erfolgt, dass der Körper des Fahrers eine vorbestimmte, für die Bedienung günstige Lage einnimmt:
a) Längsverschiebung des Fahrersitzes und Einstellen der Höhe der Vorderkante des Sitzkissens unter dem Gesichtspunkt einer komfortablen Neigung des Unterschenkels,
b) Neigungsverstellung des Sitzkissens unter dem Gesichtspunkt eines komfortablen Beugewinkels zwischen Oberschenkel und Unterschenkel,
c) Neigungsverstellung der Sitzlehne unter dem Gesichtspunkt eines komfortablen Beugewinkels zwischen Rumpf und Oberschenkel,
d) Neigungsverstellung des Sitzkissens und Neigungsverstellung der Sitzlehne unter dem Gesichtspunkt einer ausreichenden Höhe der Augen,
e) gegebenenfalls Iterationen der Schritte a) bis d).

2. Verfahren nach Anspruch 1, wobei die Höhe des Lenkrades in Abhängigkeit von der Position der Augen im Hinblick auf optimale Sichtbarkeit der Instrumente in der Schalttafel eingestellt wird.

3. Verfahren nach einem der Ansprüche 1 bis 2, wobei die Längsposition des Lenkrades im Hinblick auf einen optimalen Beugewinkel der Arme eingestellt wird.

4. Verfahren nach einem der Ansprüche 1 bis 3, wobei zumindest einige elektrische Antriebe für die Sitzverstellung und/oder die Pedalverstellung und/oder die Lenkradverstellung derart ausgebildet sind, dass sie in einem Einstellmode vom Fahrer überdrückbar sind.

5. Verfahren nach einem der Ansprüche 1 bis 4, wobei weiterhin den Komfort beeinflussende Einrichtungen entsprechend der Position des Fahrers eingestellt werden.

6. System zum Einstellen von für die Benutzung eines Kraftfahrzeugs relevanten Bauteilen, enthaltend eine Einrichtung (16) zum Erzeugen eines dreidimensionalen Oberflächenbildes zumindest eines Körperteils eines Fahrers,
Stellmotoren zum Verstellen der Position von für die Bedienung des Fahrzeugs relevanten Bauteilen, und
ein elektronisches Steuergerät (32) zur Ansteuerung der Stellmotoren, in welchem Steuergerät von der Position des Oberflächenbereiches des Fahrers abhängige Sollpositionen der durch die Stellmotoren verstellbaren Bauteile gespeichert sind,
**dadurch gekennzeichnet, dass**
das elektronische Steuergerät (32) ausgelegt ist zur Einstellung der Position des Fahrersitzes bei nicht verschiebbarer Fußpedalgruppe nach folgender Reihenfolge derart, dass der Körper des Fahrers eine vorbestimmte, für die Bedienung günstige Lage einnimmt:
a) Längsverschiebung des Fahrersitzes und Einstellen der Höhe der Vorderkante des Sitzkissens unter dem Gesichtspunkt einer komfortablen Neigung des Unterschenkels,
b) Neigungsverstellung des Sitzkissens unter dem Gesichtspunkt eines komfortablen Beugewinkels zwischen Oberschenkel und Unterschenkel
c) Neigungsverstellung der Sitzlehne unter dem Gesichtspunkt eines komfortablen Beugewinkels zwischen Rumpf und Oberschenkel,
d) Neigungsverstellung des Sitzkissens und Neigungsverstellung der Sitzlehne unter dem Gesichtspunkt einer ausreichenden Höhe der Augen,
e) gegebenenfalls Iterationen der Schritte a) bis d).

7. System nach Anspruch 6,
wobei eine Auswerteeinrichtung (36) aus dem von der Einrichtung (16) zur Erzeugung eines dreidimensionalen Oberflächenbildes erzeugten Oberflächenbild den Beugewinkel eines Beins des Fahrers in einer vorbestimmten Tätigkeitsstellung, den Rumpfbeugewinkel und den Beugewinkel wenigstens eines das Lenkrad (10) betätigenden Arms ermittelt,
in dem elektronischen Steuergerät vorbestimmte Sollbeugewinkel und Kopfpositionen gespeichert sind,
das elektronische Steuergerät den Sitz und/oder die Pedale und/oder das Lenkrad derart verstellt, dass die vorbestimmten Beugewinkel und Kopfposition erreicht werden, und das
Lenkrad nach Höhe und/oder die Rückspiegel und/oder weitere Fahrzeugfunktionen, wie einen Gurtumlenkpunkt, ein Richtmikrofon usw. entsprechend vorprogrammierten Werten einstellt.

8. System nach Anspruch 7, wobei die Einrichtung zur Erzeugung eines dreidimensionalen Oberflächenbildes zur Steuerung eines Insassenschutzsystems dient.

## Claims

1. Method for adjusting components of relevance for the use of a motor vehicle,
with which method
the position of at least one part of the body of a driver is determined by means of a three-dimensional imaging method and at least one component of relevance for the use of the motor vehicle is moved into a position as a function of the position of a surface region of the driver,
**characterised in that**
the position of the driving seat is adjusted in the following order when the foot pedal set cannot be displaced, such that the body of the driver assumes a predetermined position which is favourable for operation:
a) longitudinal displacement of the driving seat and adjustment of the height of the front edge of the seat pad to achieve a user-friendly angle of the lower leg,
b) adjustment of the angle of the seat pad to achieve a user-friendly angle of bend between upper leg and lower leg,
c) adjustment of the angle of the back-rest to achieve a user-friendly angle of bend between torso and upper leg,
d) adjustment of the angle of the seat pad and adjustment of the angle of the back-rest to ensure the eyes are at an adequate height,
e) in some instances iterations of steps a) to d).

2. Method according to claim 1, wherein the height of the steering wheel is adjusted as a function of the position of the eyes in respect of optimal visibility of the instruments on the dashboard.

3. Method according to one of claims 1 to 2, wherein the longitudinal position of the steering wheel is adjusted in respect of an optimal angle of bend of the arms.

4. Method according to one of claims 1 to 3, wherein at least some electric drive systems for seat adjustment and/or pedal adjustment and/or steering wheel adjustment are configured such that they can be bypassed by the driver in an adjustment mode.

5. Method according to one of claims 1 to 4, wherein facilities influencing comfort are also adjusted according to the position of the driver.

6. System for adjusting components of relevance for the use of a motor vehicle, containing a facility (16) for generating a three-dimensional surface image of at least one part of the body of a driver,
positioning motors for adjusting the position of components of relevance for the operation of the motor vehicle, and
an electronic control device (32) for activating the positioning motors, in which control device setpoint positions of the components that can be adjusted by the positioning motors and are dependent on the position of the surface region of the driver are stored,
**characterised in that**
the electronic control device (32) is designed to adjust the position of the driving seat in the following order when the foot pedal set cannot be displaced, such that the body of the driver assumes a predetermined position which is favourable for operation:
a) longitudinal displacement of the driving seat and adjustment of the height of the front edge of the seat pad to achieve a user-friendly angle of the lower leg,
b) adjustment of the angle of the seat pad to achieve a user-friendly angle of bend between upper leg and lower leg,
c) adjustment of the angle of the back-rest to achieve a user-friendly angle of bend between torso and upper leg,
d) adjustment of the angle of the seat pad and adjustment of the angle of the back-rest to ensure the eyes are at an adequate height,
e) in some instances iterations of steps a) to d).

7. System according to claim 6,
wherein an evaluation facility (36) determines the angle of bend of a leg of the driver in a predetermined activity position, the angle of bend of the torso and the angle of bend of at least one arm operating the steering wheel (10) from the surface image generated by the facility (16) for generating a three-dimensional surface image,
predetermined setpoint bend angles and head positions are stored in the electronic control device,
the electronic control device adjusts the seat and/or pedals and/or steering wheel such that the predetermined bend angles and head position are achieved and
the steering wheel is adjusted according to height and/or the rear-view mirrors and/or further motor vehicle functions, such as a seatbelt guide point, a directional microphone, etc. are adjusted according to pre-programmed values.

8. System according to claim 7, wherein the facility for generating a three-dimensional surface image serves to control an occupant protection system.

## Revendications

1. Procédé destiné au réglage d'éléments significatifs pour l'utilisation d'un véhicule automobile,
dans lequel procédé
la position d'au moins une partie du corps d'un conducteur est déterminée au moyen d'un procédé optique en trois dimensions et
- au moins un élément significatif pour l'utilisation du véhicule est déplacé dans une position dépendant de la position d'une zone de surface du conducteur,
**caractérisé en ce que**
le réglage de la position du siège du conducteur, dans le cas d'un groupe de pédales non réglable, s'effectue dans l'ordre ci-après, de telle sorte que le corps du conducteur prend une position prédéterminée favorable à la manoeuvre :
a) déplacement du siège du conducteur dans le sens longitudinal et réglage de la hauteur du bord avant de l'assise du siège en vue d'une inclinaison confortable de la jambe,
b) réglage de l'inclinaison de l'assise du siège en vue d'un angle de pliage confortable formé entre la cuisse et la jambe,
c) réglage de l'inclinaison du dossier du siège en vue d'un angle de pliage confortable formé entre le tronc et la cuisse,
d) réglage de l'inclinaison de l'assise du siège et réglage de l'inclinaison du dossier du siège en vue d'une hauteur suffisante des yeux,
e) le cas échéant, itérations des étapes a) à d).

2. Procédé selon la revendication 1, dans lequel la hauteur du volant de direction est réglée en fonction de la position des yeux pour une visibilité optimale des instruments dans le tableau de bord.

3. Procédé selon l'une quelconque des revendications 1 à 2, dans lequel la position du volant de direction dans le sens longitudinal est réglée pour un angle de pliage optimal des bras.

4. Procédé selon l'une quelconque des revendications 1 à 3, dans lequel au moins quelques systèmes d'entraînement électriques pour le réglage du siège et/ou le réglage de la pédale et/ou le réglage du volant de direction sont réalisés de telle sorte que, dans un mode de réglage, ils peuvent être neutralisés par le conducteur.

5. Procédé selon l'une quelconque des revendications 1 à 4, dans lequel des dispositifs influençant par ailleurs le confort sont réglés conformément à la position du conducteur.

6. Système destiné au réglage d'éléments significatifs pour l'utilisation d'un véhicule automobile, comportant un dispositif (16) destiné à générer une image de surface en trois dimensions d'au moins une partie du corps d'un conducteur,
des moteurs de réglage destinés à régler la position des éléments significatifs pour l'utilisation d'un véhicule automobile, et
un dispositif de commande (32) électronique destiné à l'activation des moteurs de réglage, dans lequel dispositif de commande sont mémorisées des positions de consigne, qui sont réglables au moyen des moteurs de réglage et qui dépendent de la position de la zone de surface du conducteur,
**caractérisé en ce que**
le dispositif de commande (32) électronique est conçu, dans le cas d'un groupe de pédales non réglable, pour le réglage de la position du siège du conducteur dans l'ordre ci-après, de telle sorte que le corps du conducteur prend une position prédéterminée favorable à la manoeuvre :
a) déplacement du siège du conducteur dans le sens longitudinal et réglage de la hauteur du bord avant de l'assise du siège en vue d'une inclinaison confortable de la jambe,
b) réglage de l'inclinaison de l'assise du siège en vue d'un angle de pliage confortable formé par la cuisse et la jambe,
c) réglage de l'inclinaison du dossier du siège en vue d'un angle de pliage confortable formé par le tronc et la cuisse,
d) réglage de l'inclinaison de l'assise du siège et réglage de l'inclinaison du dossier du siège en vue d'une hauteur suffisante des yeux,
e) le cas échéant, itérations des étapes a) à d).

7. Système selon la revendication 6, dans lequel
un dispositif d'analyse (36) détermine, à partir de l'image de surface générée par le dispositif (16) destiné à générer une image de surface en trois dimensions, l'angle de pliage d'une jambe du conducteur dans une position d'activité prédéterminée, l'angle de pliage du tronc et l'angle de pliage d'au moins un bras actionnant le volant de direction (10),
des angles de pliage de consigne et des positions de la tête prédéterminés sont mémorisées dans le dispositif de commande électronique,
le dispositif de commande électronique règle le siège et/ou la pédale et/ou le volant de direction, de manière à obtenir les angles de pliage et les positions de la tête prédéterminés, et règle conformément à des valeurs préprogrammées la hauteur du volant de direction et/ou les rétroviseurs et/ou d'autres fonctions du véhicule, telles qu'un point de renvoi de la ceinture de sécurité, un microphone directionnel, etc.

8. Système selon la revendication 7, dans lequel le dispositif destiné à générer une image de surface en trois dimensions est utilisé pour le pilotage d'un système de protection des occupants.
